# EUROPÄISCHE PATENTSCHRIFT

(11) **EP 3 235 567 B1**
(45) Veröffentlichungstag und Bekanntmachung des Hinweises auf die Patenterteilung: **24.10.2018**
(21) Anmeldenummer: 17162964.5
(22) Anmeldetag: 27.03.2017
(51) Int. Cl.: B01L 1/00, B01L 9/02, B65B 29/00, B65B 39/00, G01N 30/88

(54) **LABOREINRICHTUNG**
LABORATORY EQUIPMENT
DISPOSITIF DE LABORATOIRE

(30) Priorität: 20.04.2016 DE 202016102085 U
(43) Veröffentlichungstag der Anmeldung: 25.10.2017
(73) Patentinhaber: Düperthal Sicherheitstechnik GmbH & Co.KG, 63791 Karlstein (DE)
(72) Erfinder: BACKHAUS, Frank, 32051 Herford (DE)
(74) Vertreter: Nunnenkamp, Jörg

(56) Entgegenhaltungen:
- EP-A1- 2 878 372
- EP-A2- 1 106 254
- EP-A2- 2 407 398
- DE-U1-202015 105 167

## Beschreibung

Die Erfindung betrifft eine Laboreinrichtung, mit wenigstens einer Basis, welche zumindest eine Öffnung aufweist, und mit zumindest einem Sammelbehälter, welcher unter Zwischenschaltung einer oder mehrerer Medienleitungen mit der Öffnung verbunden ist, wobei wenigstens ein Adapter zur wahlweisen Anbringung eines Auffanggefäßes oder wenigstens einer Medienleitung im Bereich der Öffnung vorgesehen ist und als Grundbestandteil eines solchermaßen realisierten modularen Verteilsystems fungiert, wobei ferner die Basis als Arbeitsfläche ausgebildet ist, welche eine Durchführung in der Öffnung als Bestandteil des Verteilsystems aufweist, und wobei die Durchführung zur wahlweisen lösbaren Kopplung mit dem Adapter ausgebildet ist.

Bei einer Laboreinrichtung, wie sie in der WO 2004/085066 A1 beschrieben wird, ist eine Arbeitsfläche mit Abfluss und auf ihrer Oberfläche mehreren Abflussrillen ausgerüstet. Die Abflussrillen sind mit dem Abfluss verbunden und derart über die Oberfläche verteilt, dass sich für die Arbeitsfläche eine segmentartige Unterteilung ergibt. Auf diese Weise soll eine sichere Handhabung insbesondere von organischen Lösungsmitteln auf der Arbeitsfläche gelingen. Tatsächlich wird die fragliche Laboreinrichtung typischerweise im Zusammenhang mit dem Betrieb einer präparativen Hochdruck-Flüssigchromatografieanlage eingesetzt.

Die Kombination einer solchen Chromatografieanlage mit einem Sicherheitsschrank zur Aufbewahrung der Lösungsmittel bzw. der entstehenden Gefahrstoffe wird in der EP 2 878 371 A1 beschrieben. Dabei bilden die fragliche Chromatografieeinrichtung und der Sicherheitsschrank insgesamt eine transportable Arbeitseinheit. Die Tischfläche des Sicherheitsschrankes ist mit wenigstens einer Durchführung ausgerüstet, um auf diese Weise beispielsweise Schläuche von der Einrichtung zu einem im Sicherheitsschrank befindlichen Sammelbehälter zu führen. Das hat sich grundsätzlich bewährt.

Beim gattungsbildenden Stand der Technik nach der EP 1 106 254 A2 geht es insgesamt um ein Entsorgungssystem für flüssige Abfallstoffe an einem Laborarbeitsplatz. Mit Hilfe eines zugeordneten Aufnahmebehälters und einem Einlass können Abfallstoffe entsorgt werden. Zusätzlich ist der Laborarbeitsplatz auf einer Tischplatte mit einem Ausguss ausgerüstet.

Der Ausguss ist über eine Zuführleitung bzw. Abflussleitung mit dem Einlass verbunden. Der Einlass weist ein Abflussrohr auf, welches durch eine Übergangsmuffe und gegebenenfalls einen Schraubanschluss mit einem Auslassstutzen eines Trichters verbunden ist. Der Auslassstutzen steckt seinerseits abgedichtet in einem Durchführungsloch der Tischplatte.

Bei einer anderen Laboreinrichtung nach der EP 2 407 398 A2 geht es ebenfalls um das Sammeln flüssiger Abfallstoffe. Dazu ist ein Sammelbehälter vorgesehen, der eine Sammelöffnung für die Abfallstoffe aufweist. Ein mit der Sammelöffnung zusammenwirkendes Anschlussstück verfügt über eine Einfüllöffnung zum Einfüllen der Abfallstoffe in den Sammelbehälter. Dazu steht die Einfüllöffnung mit einer Leitung für die Abfallstoffe in Verbindung. Bei dem Anschlussstück handelt es sich um einen Schnellverschluss, welcher beim Anordnen des Sammelbehälters in einer Sammelposition ein selbst-tätiges Anschließen des Anschlussstückes an den Sammelbehälter bewirkt.

Schließlich wird in der DE 20 2015 105 167 U1 eine Vorrichtung zur Aufnahme von Gefahrstoffen beschrieben, die mit einem Sicherheitsschrank und wenigstens einem im Sicherheitsschrank aufgenommenen Behälter sowie eine Abfülleinrichtung mit einer außerhalb oder wandseitig des Sicherheitsschrankes angeordneten Abfüllöffnung ausgerüstet ist. Die Abfülleinrichtung verfügt über einen mechanischen Zwangsverschluss, welcher bei vollem Behälter einen weiteren Gefahrstoffzulauf über die Abfülleinrichtung verhindert.

In der Praxis werden jedoch nicht nur die zuvor beschriebenen Einsatzgebiete beobachtet und müssen abgebildet werden, sondern es besteht ein genereller Bedarf daran, die Entsorgung von Gefahrstoffen und insbesondere flüssigen Chemikalien einfach und sicher umzusetzen. Das gilt auch und insbesondere für den Fall, dass in Labors mit unterschiedlichen Aufbauten gearbeitet wird. Bisher fehlen an dieser Stelle jedoch überzeugende Lösungen dahingehend, eine einwandfreie Entsorgung unter Berücksichtigung eines einfachen und kostengünstigen Aufbaus sowie der geforderten Flexibilität zu ermöglichen. Hier setzt die Erfindung ein.

Der Erfindung liegt das technische Problem zugrunde, eine derartige Laboreinrichtung so weiterzuentwickeln, dass eine einfache Anpassung an unterschiedliche Arbeitsbedingungen unter Berücksichtigung eines zugleich kostengünstigen Aufbaus bei nach wie vor gegebener Sicherheit zur Verfügung gestellt wird.

Zur Lösung dieser technischen Problemstellung ist eine gattungsgemäße Laboreinrichtung im Rahmen der Erfindung dadurch gekennzeichnet, dass die Durchführung einerseits mit einer Aufnahme für den Adapter und andererseits mit einem Anschlussflansch für die wenigstens eine Medienleitung zum Sammelbehälter ausgerüstet ist.

Neben dem fraglichen Adapter als Grundbestandteil des beschriebenen modularen Verteilsystems greift die Erfindung typischerweise und ergänzend auf wenigstens einen Verteiler als weiteren Basisbestandteil bzw. Grundbestandteil zurück. Dabei ist der fragliche Verteiler dem Adapter in Fließrichtung nachgeschaltet und dem Sammelbehälter vorgeschaltet. Mit Hilfe des Adapters können also ein oder mehrere Medienleitungen ausgehend von der Öffnung in der Basis zusammengeführt und beispielsweise gemeinsam in dem Sammelbehälter vereinigt werden. Das heißt, der Verteiler verbindet zumindest zwei Medienleitungen miteinander. Außerdem ist die Auslegung meistens so getroffen, dass der Verteiler und/oder Adapter jeweils zur Verbindung mit zwei oder mehr Medienleitungen eingerichtet sind.

Alternativ zur Kopplung des Adapters mit einer, zwei oder noch mehr Medienleitungen besteht natürlich nach wie vor die Möglichkeit, dass der Adapter zur Anbringung eines Auffanggefäßes eingerichtet ist. Je nach Auslegung und Anwendung des Adapters ist dieser vorteilhaft als Schlauchadapter oder Trichteradapter ausgebildet. Im erstgenannten Fall dient der Adapter zur Verbindung von Medienleitungen bzw. Schläuchen mit der Öffnung. Die an zweiter Stelle genannte Variante korrespondiert dazu, dass der Adapter zur Anbringung bzw. Aufnahme des Auffanggefäßes bzw. Trichters eingerichtet und ausgelegt ist. Dadurch wird das betreffende Auffanggefäß mit der Öffnung gekoppelt.

Auf diese Weise lassen sich grundsätzlich und vom Prinzip her sämtliche denkbaren Anforderungen an eine sichere Entsorgung von insbesondere flüssigen Gefahrstoffen abbilden und umsetzen. So können die fraglichen Gefahrstoffe entweder direkt über das Auffanggefäß bzw. den Trichter unter Zwischenschaltung des in diesem Falle als Trichteradapter ausgelegten Adapters und der an die Öffnung angeschlossen Medienleitung gegebenenfalls unter Zwischenschaltung des Verteilers in den in Fließrichtung endseitig angeordneten Sammelbehälter entsorgt werden. Genauso gut besteht die Möglichkeit, die fraglichen flüssigen Gefahrstoffe direkt über eine ausgangsseitige Medienleitung dem in diesem Fall als Schlauchadapter ausgelegten Adapter zuzuführen. Im Anschluss daran werden die fraglichen Gefahrstoffe über eine weitere Medienleitung und gegebenenfalls den Verteiler in den in Fließrichtung folgenden Sammelbehälter abgeführt. Diese Variante mag beispielsweise dann zum Einsatz kommen, wenn die fraglichen flüssigen Gefahrstoffe im Zusammenhang mit beispielsweise einer Hochdruck-Flüssigchromatografieanlage anfallen und ausgangsseitig der beispielsweise in der EP 2 878 371 A1 im Detail beschriebenen Medienleitungen zur Verfügung stehen.

Nach weiterer vorteilhafter Ausgestaltung ist vorgesehen, dass der Adapter und/oder der Verteiler und/oder eine in der Öffnung der Basis vorgesehene Durchführung jeweils zum parallelen Anschluss von wenigstens zwei Medienleitungen unterschiedlichen Durchmessers eingerichtet sind. Dadurch besteht insbesondere die Möglichkeit, mit standardisierten Elementen des modularen Verteilsystems zu arbeiten, nämlich einerseits dem Schlauchadapter und andererseits dem Verteiler sowie der Durchführung. Denn dadurch, dass der Schlauchadapter und/oder der Verteiler und/oder die Durchführung jeweils so ausgelegt sind, dass parallel wenigstens zwei Medienleitungen unterschiedlichen Durchmessers miteinander gekoppelt werden können, ist eine problemlose Anpassung an die jeweils anfallende Menge an flüssigem Gefahrstoff unschwer möglich. Außerdem kann diese Variante gegebenenfalls verschiedenen Viskositäten des anfallenden flüssigen Gefahrstoffes Rechnung tragen.

So wird man tendenziell bei einem hochviskosen Gefahrstoff oder bei großen anfallenden Mengen jeweils den Zweig des Schlauchadapters und des Verteilers sowie der Durchführung nutzen, welcher zum Anschluss der Medienleitung mit großem Durchmesser eingerichtet ist. Fallen dagegen nur geringe Mengen an flüssigen Gefahrstoffen an, so wird man demgegenüber mit dem Zweig zum Anschluss der Medienleitungen kleinen Durchmessers arbeiten. Da der fragliche Adapter und auch der jeweilige Verteiler sowie die Durchführung sowohl den Anschluss der Medienleitung kleinen Durchmessers als auch der Medienleitung großen Durchmessers erlauben, lassen sich die beschriebenen Anwendungsgebiete jeweils mit nur einem einzigen Schlauchadapter respektive Verteiler sowie einer einzigen Durchführung abdecken.

Darüber hinaus kann der Schlauchadapter wahlweise zum Anschluss einer, zwei oder noch mehr Medienleitungen eingerichtet sein. Dies setzt lediglich die Auswahl des betreffenden Schlauchadapters mit den zugehörigen Anschlüssen für die Medienleitungen voraus. Die weitere Medienführung über die eine oder die mehreren Medienleitungen am Ausgang des Adapters bzw. Schlauchadapters, gegebenenfalls den Verteiler bis hin schließlich zum Sammelbehälter bleibt hiervon unberührt.

Gleiches gilt für den Fall, dass anstelle der Medienleitungen und des Schlauchadapters der Trichteradapter zum Einsatz kommt. Auch in diesem Fall ist lediglich ein Austausch beispielsweise des Schlauchadapters gegen den Trichteradapter erforderlich, ohne dass die weitere Medienführung hiervon beeinflusst wird. Das auf diese Weise realisierte modulare Verteilsystem lässt sich also an die spezifischen Anforderungen zielgenau anpassen. Das alles gelingt unter Rückgriff auf standardisierte Grundbestandteile, nämlich den Adapter und den Verteiler sowie die Durchführung. Hierin sind die wesentlichen Vorteile zu sehen.

Nach vorteilhafter Ausgestaltung kann die eine bzw. können die mehreren Medienleitungen elektrisch leitfähig ausgebildet sein. Vergleichbares kann auch für den Adapter und den Verteiler sowie die Durchführung gelten. Auf diese Weise lassen sich wirksam etwaige elektrostatische Aufladungen der Laboreinrichtung verhindern und können abgeleitet werden. Dazu kann die betreffende Medienleitung beispielsweise mit einem Massekontakt verbunden werden. Bei der Medienleitung handelt es sich vorteilhaft um eine Kunststoffleitung und insbesondere um eine solche aus Polytetrafluorethylen (PTFE). Selbstverständlich lassen sich alternativ auch andere thermoplastische Kunststoffe bei der Realisierung der Medienleitungen einsetzen. Solche Medienleitungen aus Polytetrafluorethylen zeichnen sich durch eine hohe chemische Beständigkeit aus und sind damit für den beschriebenen Einsatzzweck prädestiniert.

Darüber hinaus hat es sich als günstig erwiesen, wenn der Adapter, der Verteiler und gegebenenfalls die Durchführung als jeweils Kunststoffspritzgussteile ausgebildet sind. Da die vorgenannten Bauteile üblicherweise nicht mit den zur entsorgenden flüssigen Gefahrstoffen in Berührung kommen, lassen sich diese vorteilhaft als Kunststoffspritzgussformteile aus beispielsweise thermoplastischen Kunststoffen wie Polyethylen oder Polypropylen fertigen. Im Bereich von beispielsweise Anschlüssen für die Medienleitungen beim Adapter sowie kein Verteiler und der Durchführung kann man in diesem Zusammenhang beispielsweise mit Einsätzen aus Polytetrafluorethylen arbeiten.

Die die Öffnung aufweisende Basis und der Adapter können funktional zusammenfallen. In diesem Fall bildet der Adapter die Basis und ist vorteilhaft als Schraubadapter ausgebildet. Dabei hat es sich bewährt, wenn der Schraubadapter einerseits mit einem zugehörigen Verteiler lösbar verbunden ist und andererseits mit wenigstens einer Medienleitung. Neben diesem gleichsam fliegenden Aufbau der Basis hat es sich als besonders günstig und vorteilhaft erwiesen, wenn die Basis als Arbeitsfläche ausgebildet ist. Dabei ist die wenigstens eine Öffnung in der betreffenden Arbeitsfläche erfindungsgemäß mit der Durchführung ausgerüstet.

Bei der Durchführung handelt es sich ebenso wie bei dem Adapter und dem Verteiler um einen Grundbestandteil des modularen Verteilsystems. Denn die Durchführung ist erfindungsgemäß zur wahlweise lösbaren Kopplung mit dem Adapter ausgebildet. Zu diesem Zweck verfügt die Durchführung einerseits über die Aufnahme für den Adapter und ist andererseits mit dem Anschlussflansch für die wenigstens eine Medienleitung zum Sammelbehälter ausgerüstet. Dabei kann die Aufnahme in der fraglichen Durchführung als Gewindeaufnahme und der zugehörige Adapter als in die Gewindeaufnahme lösbar eingreifender Schraubadapter ausgebildet sein. Generell lassen sich der Adapter und die Durchführung aber auch beispielsweise über eine Bajonettverbindung lösbar miteinander koppeln.

Da es sich bei der einen bzw. den mehreren Durchführungen ebenfalls um einen Grundbestandteil des realisierten modularen Verteilsystems handelt, kann der Aufbau der erfindungsgemäßen Laboreinrichtung problemlos und schnell sowie unter verringerten Kosten und bei zugleich einwandfreier Sicherheit umgesetzt und vorgenommen werden. Beispielsweise wird man zunächst die als Basis ausgebildete Arbeitsfläche mit der einen oder den mehreren gewünschten Öffnungen ausrüsten. Die Öffnungen sind dabei jeweils an die anschließend in der jeweiligen Öffnung zu platzierende Durchführung angepasst. Nach Montage der Durchführung kann der gewünschte Adapter mit der Durchführung vereinigt werden. Hierbei kommt entweder der Schlauchadapter oder der Trichteradapter zum Einsatz.

Da die Durchführung vorteilhaft ebenso wie der Verteiler zur parallelen Verbindung mit zwei oder mehr Medienleitungen eingerichtet ist, und zwar insbesondere zwei Medienleitungen unterschiedlichen Durchmessers, lässt sich die Durchführung anschließend problemlos mit beispielsweise dem Verteiler über die Medienleitung kleinen Durchmessers oder die Medienleitung großen Durchmessers koppeln. Von dem Verteiler ausgehend sorgt nun erneut die Medienleitung kleinen oder großen Durchmessers für die Abfuhr der zu entsorgenden flüssigen Gefahrstoffe zum Sammelbehälter. Dabei kommt es am Anbringungsort lediglich darauf an, die gewünschte Medienleitung großen oder kleinen Durchmessers auszuwählen und von ihrer Länge her an die Anforderungen anzupassen. Hierin sind die wesentlichen Vorteile zu sehen.

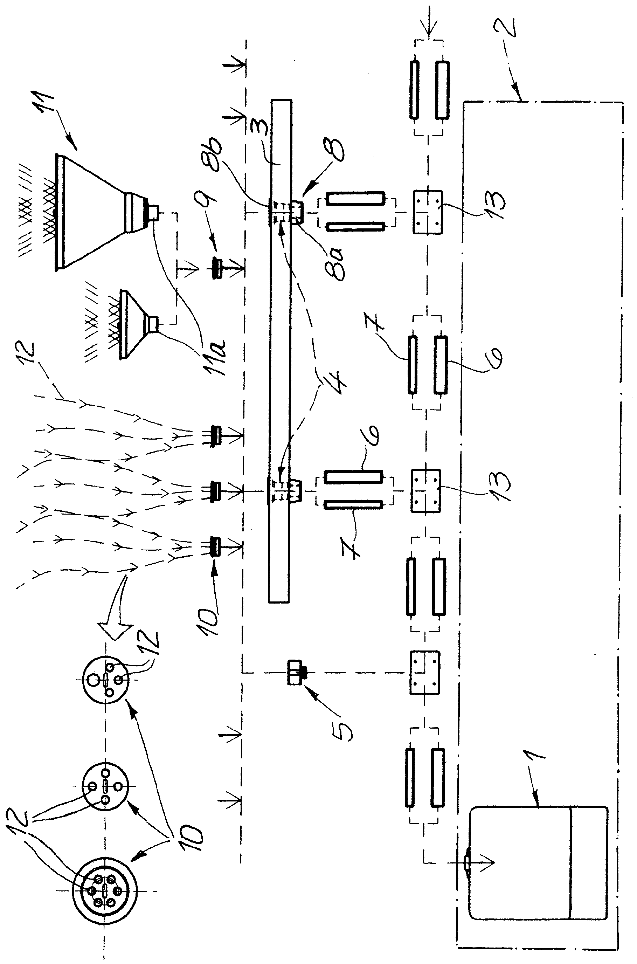

Im Folgenden wird die Erfindung anhand einer lediglich ein Ausführungsbeispiel darstellenden Zeichnung erläutert. Die einzige Figur zeigt die erfindungsgemäße Laboreinrichtung schematisch.

In der einzigen Figur ist eine Laboreinrichtung dargestellt, die dazu dient, insbesondere flüssige Gefahrgüter wie beispielsweise chemische Flüssigkeiten respektive organische Lösungsmittel sicher zu entsorgen. Dazu werden die fraglichen Gefahrstoffe in einen Sammelbehälter 1 überführt. Der Sammelbehälter 1 kann dazu in einem in der einzigen Figur lediglich angedeuteten Sicherheitsschrank 2 platziert werden. Bei dem Sicherheitsschrank 2 handelt es sich im Ausführungsbeispiel um einen sogenannten Sicherheits-Untertischschrank 2, welcher unterhalb einer Arbeitsfläche 3 respektive einer entsprechenden Laborarbeitsplatte Platz findet. Bei dem fraglichen Sicherheitsschrank und insbesondere Sicherheits-Untertischschrank 2 kann es sich um einen solchen handeln, wie er in der DE 20 2009 004 710 U1 der Anmelderin im Detail beschrieben wird.

Die Arbeitsfläche 3 fungiert im Ausführungsbeispiel als Basis 3, welche zumindest eine Öffnung 4 aufweist. Im Ausführungsbeispiel ist die Basis bzw. Arbeitsfläche 3 mit zwei Öffnungen 4 ausgerüstet. Grundsätzlich kann auch ein gleichsam neben der Arbeitsfläche 3 vorgesehener und nachfolgend noch näher zu beschreibender Schraubadapter 5 als Basis 5 fungieren. Jedenfalls handelt es sich bei der jeweiligen Basis 3 respektive 5 um eine Art Anker oder Ausgangspunkt, von dem ausgehend das nachfolgend im Detail zu beschreibende und erfindungsgemäße modulare Verteilungssystem aufgebaut wird.

Der bereits beschriebene und nach dem Ausführungsbeispiel im Innern des Sicherheitsschrankes 2 befindliche Sammelbehälter 1 ist unter Zwischenschaltung mehrerer Medienleitungen 6, 7 mit der fraglichen Öffnung 4 verbunden. Im Ausführungsbeispiel sind zwei Medienleitungen 6, 7 unterschiedlichen Durchmesser dargestellt. Man erkennt, dass die Medienleitung 6 einen größeren Durchmesser als die Medienleitung 7 aufweist. Beispielsweise mag der Durchmesser der Medienleitung 6 1,5 bis maximal 3 mal so groß wie derjenige der Medienleitung 7 sein. Dabei ist die Auslegung insgesamt so getroffen, dass grundsätzlich beide Medienleitungen 6, 7 wahlweise oder auch parallel den Sammelbehälter 1 mit der Öffnung 4 in der Basis 3 koppeln. Im Regelfall wird jedoch nur entweder die Medienleitung 6 großen Durchmessers oder nur die Medienleitung 7 kleinen Durchmessers verwendet. Das ändert nichts daran, dass sämtliche nachfolgend zu beschriebenen Bauteile sowohl für den Anschluss der Medienleitung 6 als auch für den Anschluss der Medienleitung 7 eingerichtet und ausgelegt sind. Das gilt namentlich im gezeigten Beispiel für einen Adapter 9, 10, eine Durchführung 8 und schließlich einen Verteiler 13, die jeweils die Grundbestandteile des dargestellten modularen Verteilsystems 8; 9, 10; 13 definieren. Der Durchmesser der Medienleitung 6 mag sich dabei im Bereich von 10 mm bis 20 mm bewegen, wohingegen die Medienleitung 7 den Bereich unterhalb von 10 mm abdeckt, beispielsweise 2 mm bis 8 mm.

Die Öffnung 4 in der Tischfläche bzw. Basis 3 ist nach dem Ausführungsbeispiel mit der Durchführung 8 ausgerüstet. Die Durchführung 8 ist unterseitig bzw. ausgangsseitig zum Anschluss sowohl der Medienleitung 6 wie auch der parallelen Medienleitung 7 eingerichtet. Dazu verfügt die Durchführung 8 über einen entsprechenden Anschlussflansch 8a, der zur Anbringung und Aufnahme der betreffenden Medienleitungen 6, 7 eingerichtet ist. Der Anschlussflansch 8a ist vorliegend an einer Unterseite der Tischfläche bzw. Basis 3 vorgesehen. Gegenüberliegend von dem Anschlussflansch 8a verfügt die Durchführung 8 zusätzlich noch über eine Aufnahme 8b.

Die Aufnahme 8b der Durchführung 8 ist zur Kopplung mit dem Adapter 9 bzw. 10 ausgerüstet. Auf diese Weise lässt sich die Durchführung 8 wahlweise lösbar mit dem fraglichen Adapter 9, 10 koppeln. Zu diesem Zweck ist die Aufnahme 8b in der Durchführung 8 als Gewindeaufnahme und der Adapter 9, 10 als in die Gewindeaufnahme lösbar eingreifender Schraubadapter ausgebildet.

Anhand der Darstellung erkennt man, dass zwei verschiedene Arten an Adaptern 9, 10 realisiert sind. Bei dem Adapter 9 handelt es sich um einen Trichteradapter 9, während der Adapter 10 als Schlauchadapter 10 ausgebildet ist. Der Trichteradapter 9 dient zur Aufnahme und Halterung eines Trichters bzw. allgemein eines Auffanggefäßes 11 zur Aufnahme und Weiterleitung der flüssigen Gefahrstoffe bis hin zum Sammelbehälter 1. Dazu ist der Trichteradapter 9 einerseits mit einem außenseitigen Gewinde zum Eingriff in die Aufnahme 8b bzw. die Gewindeaufnahme der Durchführung 8 und andererseits mit beispielsweise einer Steckaufnahme für einen Steckeinsatz 11a des Auffanggefäßes 11 ausgerüstet. Da die in der einzigen Figur dargestellten Auffanggefäße 11 eine unterschiedliche Größe aufweisen, allerdings mit jeweils einem gleich ausgelegten Steckeinsatz 11a für den Trichteradapter 9 ausgerüstet sind, lassen sich unterschiedliche Auffanggefäße 11 unter Zwischenschaltung des Trichteradapters 9 mit der Durchführung 8 koppeln.

Alternativ hierzu kann die Durchführung 8 eingangsseitig auch mit dem Schlauchadapter 10 lösbar verbunden werden. Dazu ist es lediglich erforderlich, einen geeigneten Schlauchadapter 10 auszuwählen. Die sämtlichen Schlauchadapter 10 zeichnen sich dadurch aus, dass außenseitig erneut ein Außengewinde vorgesehen ist, welches in das entsprechende Gewinde bzw. die Gewindeaufnahme in der Aufnahme 8b der Durchführung 8 eingreift. Die einzelnen Schlauchadapter 10 unterscheiden sich lediglich durch die Anzahl und gegebenenfalls Größe der hiermit verbundenen Medienleitungen 12. Anhand der Darstellung in der Figur erkennt man, dass von rechts nach links wahlweise drei Medienleitungen 12, vier oder sogar sechs Medienleitungen 12 mit dem betreffenden Schlauchadapter 10 gekoppelt werden können, um über die Medienleitungen 12 zugeführte flüssige Gefahrstoffe nach Passieren der Durchführung 8 und durch die Öffnung 4 hindurch über die daran angeschlossenen Medienleitungen 6 bis 7 schließlich in den Sammelbehälter 1 im Innern des Untertischschrankes 2 zu überführen.

Neben dem Adapter 9, 10 ist als weiterer Basisbestandteil oder Grundbestandteil des realisierten modularen Verteilsystems 8; 9, 10; 13 wenigstens ein dem betreffenden Adapter 9, 10 in Fließrichtung des zu entsorgenden flüssigen Gefahrstoffes nachgeschalteter und dem Sammelbehälter 1 vorgeschalteter Verteiler 13 vorgesehen. Man erkennt, dass im Ausführungsbeispiel mehrere Verteiler 13 realisiert sind. Der jeweilige Verteiler 13 ist dabei jeweils zum parallelen Anschluss der beiden Medienleitungen 6, 7 unterschiedlichen Durchmessers eingerichtet. Gleiches gilt für den Adapter 9, 10 sowie die Durchführung 8, also sämtliche Grundbestandteile des Verteilsystems 8; 9, 10; 13.

Dabei ist die Auslegung so getroffen, dass im Innern des Verteilers 13 die entsprechenden Bohrungen einerseits im Zusammenhang mit dem Anschluss der Medienleitung 7 geringen Durchmessers und andererseits im Zusammenhang mit der Medienleitung 6 großen Durchmessers selbstverständlich nicht miteinander kommunizieren, sondern getrennt voneinander ausgelegt sind. Das gilt vergleichbar für den Adapter 9, 10 sowie die Durchführung 8. Außerdem ist der Verteiler 13 so gestaltet, dass er zumindest zwei Medienleitungen 6 bzw. 7 eingangsseitig und erneut zwei Medienleitungen 6, 7 ausgangsseitig miteinander verbindet.

Die Medienleitungen 6 bzw. 7 und auch 12 sind im Allgemeinen elektrisch leitfähig ausgebildet, um etwaige elektrostatische Aufladungen des gesamten dargestellten modularen Verteilsystems 8; 9, 10; 13 zu verhindern. Gleiches gilt regelmäßig auch für die Durchführung 8, den Adapter 9, 10 und auch den Verteiler 13. Bei den vorgenannten sämtlichen Bauteilen handelt es sich um solche aus Kunststoff. Tatsächlich sind insbesondere die Medienleitungen 6, 7 und 12 aus einem chemisch beständigen Kunststoff hergestellt, meistens Polytetrafluorethylen. Dagegen kann für die Herstellung der Durchführung 8, des Adapters 9, 10 sowie des Verteilers 13 generell auf thermoplastische Kunststoffe wie Polyethylen oder Polypropylen zurückgegriffen werden.

Das dargestellte und realisierte modulare Verteilsystem 8; 9, 10; 13 lässt sich einfach und unter Berücksichtigung sämtlicher Sicherheitsanforderungen an die spezifischen Einbau- und Arbeitsbedingungen anpassen. Dazu ist es zunächst einmal erforderlich, die Arbeitsfläche bzw. Basis 3 mit den beiden Öffnungen 4 auszurüsten, die von ihrer Gestalt und Größe her an die anschließend in die Öffnung 4 jeweils eingebrachte Durchführung 8 angepasst werden müssen. Die Basis 3 oder auch 5 fungiert also als Ausgangspunkt für die Auslegung und den Aufbau des modularen Verteilsystems 8; 9, 10; 13. Nach Platzierung der Durchführung 8 in der jeweiligen Öffnung 4 kann dann wahlweise das Auffanggefäß 11 oder die eine oder die mehreren Medienleitungen 12 eingangsseitig an die Öffnung 4 angeschlossen werden. Das setzt lediglich die Auswahl des geeigneten Adapters 9, 10 voraus. Da die Adapter 9, 10 sämtlich lösbar in der zugehörigen Aufnahme 8b der Durchführung 8 aufgenommen werden können, wird der modulare und universale Charakter deutlich.

Ausgangsseitig der Durchführung 8 sorgt der an dieser Stelle vorgesehene Anschlussflansch 8a für die Kopplung der Durchführung 8 mit den parallelen Medienleitungen 6, 7, über welche die jeweils flüssigen Gefahrstoffe ausgehend von der Öffnung 4 bis hin zum Sammelbehälter 1 geführt und dort gesammelt werden. Dabei kann unter Berücksichtigung der gewählten Auslegung das gesamte modulare Verteilsystem beispielsweise bis hin zur Tischfläche 3 unverändert beibehalten werden, und zwar auch dann, wenn anstelle des Auffanggefäßes 11 die Medienleitungen 12 oder umgekehrt über den jeweils zugehörigen Adapter 9, 10 mit der betreffenden Durchführung 8 eingangsseitig gekoppelt werden sollen.

Mit Hilfe des einen bzw. der mehreren Verteiler 13 werden dann die verschiedenen Medienleitungen 6, 7 miteinander und mit dem Sammelbehälter 1 verbunden. Dabei gelingt die Medienabfuhr ausgehend von der Basis bzw. Tischfläche 3 besonders elegant und einfach dadurch, dass sowohl die Durchführung 8 mit dem betreffenden Anschlussflansch 8a als auch der Adapter 9, 10 und die Verteiler 13 jeweils so ausgelegt sind, dass sie parallel zum Anschluss sowohl der Medienleitung 6 großen Durchmessers als auch der Medienleitung 7 kleineren Durchmessers geeignet und eingerichtet sind.

Das heißt, je nach beispielsweise anfallender Flüssigkeitsmenge kann unter Beibehaltung der Durchführung 8 und des Anschlussflansches 8a sowie der jeweiligen Verteiler 13 und der Adapter 9, 10 und selbstverständlich auch unter Beibehaltung des Sammelbehälters 1 wahlweise entweder auf die Medienleitungen 6 großen Durchmessers oder die Medienleitungen 7 kleinen Durchmessers für die Abfuhr der flüssigen Gefahrstoffe ausgehend von der Öffnung 4 bis hin zum Sammelbehälter 1 zurückgegriffen werden.

## Patentansprüche

1. Laboreinrichtung, mit wenigstens einer Basis (3, 5), welche zumindest eine Öffnung (4) aufweist, und mit zumindest einem Sammelbehälter (1), welcher unter Zwischenschaltung einer oder mehrerer Medienleitungen (6, 7) mit der Öffnung (4) verbunden ist, wobei
- wenigstens ein Adapter (9, 10;) zur wahlweisen Anbringung eines Auffanggefäßes (11) oder wenigstens einer Medienleitung (12) im Bereich der Öffnung (4) vorgesehen ist und als Grundbestandteil eines solchermaßen realisierten modularen Verteilsystems (8; 9, 10; 13) fungiert, wobei ferner
- die Basis (3, 5) als Arbeitsfläche (3) ausgebildet ist, welche eine Durchführung (8) in der Öffnung (4) als Bestandteil des Verteilsystems (8, 9, 10; 13) aufweist, und wobei
- die Durchführung (8) zur wahlweise lösbaren Kopplung mit dem Adapter (9, 10) ausgebildet ist,
**dadurch gekennzeichnet, dass**
- die Durchführung (8) einerseits mit einer Aufnahme (8b) für den Adapter (9, 10) und andererseits mit einem Anschlussflansch (8a) für die wenigstens eine Medienleitung (6, 7) zum Sammelbehälter (1) ausgerüstet ist.

2. Einrichtung nach Anspruch 1, **dadurch gekennzeichnet, dass** neben dem Adapter (9, 10) wenigstens ein dem Adapter (9, 10) in Fließrichtung nachgeschalteter und dem Sammelbehälter (1) vorgeschalteter Verteiler (13) als weiterer Basisbestandteil des modularen Verteilsystems (8; 9, 10; 13) vorgesehen ist.

3. Einrichtung nach Anspruch 2, **dadurch gekennzeichnet, dass** der Verteiler (13) zumindest zwei Medienleitungen (6, 7) miteinander verbindet.

4. Einrichtung nach Anspruch 2 oder 3, **dadurch gekennzeichnet, dass** der Verteiler (13) und/oder der Adapter (9, 10) jeweils zur Verbindung mit zwei oder mehr Medienleitungen (6, 7; 12) eingerichtet sind.

5. Einrichtung nach einem der Ansprüche 1 bis 4, **dadurch gekennzeichnet, dass** die Basis (3, 5) als Schraubadapter (5) ausgebildet ist, welcher seinerseits mit dem Verteiler (13) lösbar verbunden ist.

6. Einrichtung nach einem der Ansprüche 1 bis 5, **dadurch gekennzeichnet, dass** ie Aufnahme (8b) in der Durchführung (8) als Gewindeaufnahme und der Adapter (9, 10) als in die Gewindeaufnahme lösbar eingreifender Schraubadapter ausgebildet ist.

7. Einrichtung nach einem der Ansprüche 1 bis 6, **dadurch gekennzeichnet, dass** der Adapter (9, 10) als Schlauchadapter (9) oder Trichteradapter (10) ausgebildet ist.

8. Einrichtung nach einem der Ansprüche 1 bis 7, **dadurch gekennzeichnet, dass** der Adapter (9, 10) und/oder die Durchführung (8) und/oder der Verteiler (13) jeweils zum parallelen Anschluss von wenigstens zwei Medienleitungen (6, 7) unterschiedlichen Durchmessers eingerichtet sind.

9. Einrichtung nach einem der Ansprüche 1 bis 8, **dadurch gekennzeichnet, dass** die jeweilige Medienleitung (6, 7; 12) elektrisch leitfähig ausgebildet ist.

10. Einrichtung nach einem der Ansprüche 1 bis 9, **dadurch gekennzeichnet, dass** die Medienleitung (6, 7; 12) als Kunststoffleitung, insbesondere aus Polytetrafluorethylen, ausgelegt ist.

11. Einrichtung nach einem der Ansprüche 1 bis 10, **dadurch gekennzeichnet, dass** der Adapter (9, 10), der Verteiler (13) und gegebenenfalls die Durchführung (8) als jeweils Kunststoffspritzgussformteile ausgebildet sind.

12. Einrichtung nach einem der Ansprüche 1 bis 11, **dadurch gekennzeichnet, dass** der Sammelbehälter (1) in einem Sicherheitsschrank (2), insbesondere einem Untertisch-Sicherheitsschrank (2), platziert ist.

## Claims

1. Laboratory installation with at least one base (3, 5), which has at least one opening (4) and with at least one collection container (1) which with the interposition of one or more media lines (6, 7) is connected to the opening (4), wherein
- at least one adapter (9, 10;) for the optional attachment of a collection vessel (11) or at least one media line (12) is provided in the area of the opening (4) and functions as the basic component of a thus brought about modular distribution system (8; 9, 10; 13),
wherein
- the base (3, 5) is also designed as a worktop (3) which has a duct (8) in the opening (4) as a component part of the distribution system (8, 9, 10; 13) and wherein
- the duct (8) is designed for optional detachable connection to the adapter (9, 10) **characterised in that**
- the duct (8) is on the one hand fitted with a holder (8b) for the adapter (9, 10) and on the other hand with a connection flange (8a) for the at least one media line (6, 7) to the collection container (1).

2. Installation according to claim 1 **characterised in that** in addition to the adapter (9, 10), at least one distributor (13), as a further basic component of the modular distribution system (8; 9, 10; 13), is provided downstream of the adapter (9, 10) in the direction flow and upstream of the collection container (1).

3. Installation according to claim 2 **characterised in that** the distributor (13) connects at
least two media lines (6, 7) with each other.

4. Installation according to claim 2 or 3 **characterised in that** the distributor (13) and/or the adapter (9, 10) are each set up to be connected to two or more media lines (6, 7; 12).

5. Installation according to any one of claims 1 to 4 **characterised in that** the base (3, 5) is designed as a screw adapter (5) which in turn is detachably connected to the distributor (13).

6. Installation according to any one of claims 1 to 5 **characterised in that** the holder (8b) in the duct (8) is designed as a threaded holder and the adapter (9, 10) is designed as a screw adapter that detachably engages in the threaded holder.

7. Installation according to any one of claims 1 to 6 **characterised in that** the adapter (9, 10) is designed as a hose adapter (9) or funnel adapter (10).

8. Installation according to any one of claims 1 to 7 **characterised in that** the adapter (9, 10) and/or the duct (8) and/or the distributor (13) are each set up for the parallel connection of at least two media lines (6, 7) of different diameter.

9. Installation according to any one of claims 1 to 8 **characterised in that** the respective media line (6, 7; 12) is designed to be electrically conductive.

10. Installation according to any one of claims 1 to 9 **characterised in that** the media line (6, 7; 12) is designed as a plastic line, in particular made of polytetrafluorethylene.

11. Installation according to any one of claims 1 to 10 **characterised in that** the adapter (9, 10), the distributor (13) and, if applicable, the duct (8) are each formed as plastic injection moulded components.

12. Installation according to any one of claims 1 to 11 **characterised in that** the collection container (1) is placed in a safety cabinet (2), in particular in an under-table safety cabinet (2).

## Revendications

1. Système de laboratoire, pourvu d'au moins une base (3, 5), laquelle comporte au moins une ouverture (4) et d'au moins un récipient collecteur (1), lequel par l'intermédiaire d'un ou de plusieurs conduits de fluide (6, 7) est relié avec l'ouverture (4),
- au moins un adaptateur (9, 10 ;) pour le montage d'un contenant récepteur (11) ou d'au moins un conduit de fluide (12) étant prévu dans la région de l'ouverture (4) et faisant office d'un composant de base d'un système distributeur (8 ; 9, 10 ; 13)
- modulaire réalisé de la sorte, la base (3, 5) étant conçue par ailleurs comme un plan de travail (3) lequel comporte un passage (8) dans l'ouverture (4) comme composant du système distributeur (8, 9, 1O ; 13)
- et le passage (8) étant conçu pour être accouplé de manière amovible avec l'adaptateur (9, 10), **caractérisé en ce que**
- le passage (8) est équipé d'une part d'un réceptacle (8b) pour l'adaptateur (9, 10) et d'autre part d'une bride de raccordement (8a) pour l'au moins un conduit de fluide (6, 7) vers le récipient collecteur (1).

2. Système selon la revendication 1, **caractérisé en ce que** parallèlement à l'adaptateur (9, 10), il est prévu au moins un distributeur (13) monté en aval de l'adaptateur (9, 10) dans la direction d'écoulement et monté en amont du récipient collecteur (1), en tant que composant de base supplémentaire du système distributeur (8 ; 9, 10 ; 13) modulaire.

3. Système selon la revendication 2, **caractérisé en ce que** le distributeur (13) relie l'un à l'autre au moins deux conduits de fluide (6, 7).

4. Système selon la revendication 2 ou 3, **caractérisé en ce que** le distributeur (13) et/ou l'adaptateur (9, 10) sont aménagés chacun pour être reliés avec deux ou plusieurs conduits de fluide (6, 7 ; 12).

5. Système selon l'une quelconque des revendications 1 à 4, **caractérisé en ce que** la base (3, 5) est conçu sous la forme d'un adaptateur à visser (5), qui pour sa part est relié de manière amovible avec le distributeur (13).

6. Système selon l'une quelconque des revendications 1 à 5, **caractérisé en ce que** le réceptacle (8b) est conçu dans le passage (8) sous forme de taraudage et l'adaptateur (9, 10) est conçu en tant qu'adaptateur à visser s'engageant de manière amovible dans le taraudage.

7. Système selon l'une quelconque des revendications 1 à 6, **caractérisé en ce que** l'adaptateur (9, 10) est conçu sous la forme d'un adaptateur de flexible (9) ou d'un adaptateur de trémie (10).

8. Système selon l'une quelconque des revendications 1 à 7, **caractérisé en ce que** l'adaptateur (9, 10) et/ou le passage (8) et/ou le distributeur (13) sont aménagés chacun en tant que raccord parallèle d'au moins deux conduits de fluide (6, 7) de différents diamètres.

9. Système selon l'une quelconque des revendications 1 à 8, **caractérisé en ce que** le conduit de fluide (6, 7 ; 12) respectif est conçu en version conductrice d'électricité.

10. Système selon l'une quelconque des revendications 1 à 9, **caractérisé en ce que** le conduit de fluide (6, 7 ; 12) est conçu sous la forme d'un conduit en matière plastique, notamment en polytétrafluoréthylène.

11. Système selon l'une quelconque des revendications 1 à 10, **caractérisé en ce que** l'adaptateur (9, 10), le distributeur (13) et le cas échéant, le passage (8) sont conçus chacun en tant que pièce en matière plastique moulée par injection.

12. Système selon l'une quelconque des revendications 1 à 11, **caractérisé en ce que** le récipient collecteur (1) est placé dans une armoire de sécurité (2), notamment dans une armoire de sécurité (2) sous paillasse.
